Europäisches Patentamt

European Patent Office

Office européen des brevets

(19)

(11) **EP 1 105 978 B1**

(12) **FASCICULE DE BREVET EUROPEEN**

(45) Date de publication et mention
de la délivrance du brevet:
**16.07.2003   Bulletin 2003/29**

(21) Numéro de dépôt: **99939484.4**

(22) Date de dépôt: **20.08.1999**

(51) Int Cl.⁷: **H04B 7/005**, H04B 17/00

(86) Numéro de dépôt international:
**PCT/FR99/02019**

(87) Numéro de publication internationale:
**WO 00/011805 (02.03.2000 Gazette 2000/09)**

(54) **PROCEDE DE MESURE SIMULTANEE DES CARACTERISTIQUES DE PROPAGATION D'UNE PLURALITE DE CANAUX RADIOELECTRIQUES**

VERFAHREN ZUR GLEICHZEITIGEN MESSUNG DER IMPULSANTWORTEN VON MEHREREN FUNKKANÄLEN

METHOD FOR SIMULTANEOUSLY MEASURING THE PROPAGATING CHARACTERISTICS OF A PLURALITY OF RADIOELECTRIC CHANNELS

(84) Etats contractants désignés:
**AT BE CH CY DE DK ES FI FR GB GR IE IT LI LU MC NL PT SE**

(30) Priorité:  **20.08.1998  FR 9810577**

(43) Date de publication de la demande:
**13.06.2001   Bulletin 2001/24**

(73) Titulaire: **FRANCE TELECOM exploitant public 75015 Paris (FR)**

(72) Inventeurs:
• **ZAYANA, Karim**
  **F-78000 Versailles (FR)**
• **DUPONTEIL, Daniel**
  **F-92170 Vanves (FR)**

(74) Mandataire: **Audier, Philippe André et al Brevalex,**
  **3, rue du Docteur Lancereaux**
  **75008 Paris (FR)**

(56) Documents cités:
**DE-A- 4 233 222**

• **KADEL G: "MEASUREMENT OF WIDEBAND MICRO- AND MACRO-DIVERSITY CHARACTERISTICS OF THE MOBILE RADIO CHANNEL" PROCEEDINGS OF THE VEHICULAR TECHNOLOGY CONFERENCE, STOCKHOLM, JUNE 8 - 10, 1994, vol. 1, 8 juin 1994 (1994-06-08), pages 165-169, XP000496655 INSTITUTE OF ELECTRICAL AND ELECTRONICS ENGINEERS cité dans la demande**
• **G. KADEL: "Simulation of the DECT System Using Wideband Channel Data Measured in Two Diversity Branches." CONFERENCE RECORD, 2ND INTERNATIONAL CONFERENCE ON UNIVERSAL PERSONAL COMMUNICATIONS, OTTAWA 12-15 OCT. 1993, VOL. 2 PAGES 546-550,, XP002104822 IEEE New York cité dans la demande**
• **TOBIAS FELHAUSER ET AL: "OPTIMIZED WIDEBAND SYSTEM FOR UNBIASED MOBILE RADIO CHANNEL SOUNDING WITH PERIODIC SPREAD SPECTRUM SIGNALS" IEICE TRANSACTIONS ON COMMUNICATIONS, vol. E76-B, no. 8, 1 août 1993 (1993-08-01), pages 1016-1028, XP000396907**
• **LORENZ R W: "OUTDOOR WIDEBAND MOBILE-RADIO PROPAGATION STUDIES IN EUROPE" IEICE TRANSACTIONS ON COMMUNICATIONS, vol. E76-B, no. 2, 1 février 1993 (1993-02-01), pages 65-77, XP000362098**

**EP 1 105 978 B1**

**Description**

**Domaine technique**

La présente invention a pour objet un procédé de mesure simultanée des caractéristiques de propagation d'une pluralité de canaux radioélectriques. Elle trouve une application dans les radiocommunications avec des mobiles. Les canaux radioélectriques, dont on mesure les caractéristiques, sont ici à large bande.

**Etat de la technique antérieure**

Dans un système de radiocommunications avec des mobiles, comme par exemple dans le système GSM ou dans le système IS-95, un signal hertzien se propage entre des stations de base fixes, reliées au réseau téléphonique, et des utilisateurs mobiles, qu'on appellera par la suite stations mobiles. Chaque liaison entre une station de base et une station mobile se fait grâce à un canal radioélectrique ou radiomobile.

Le signal hertzien parvient à la station mobile (dans un sens dit descendant) ou à la station de base (dans un sens dit montant) avec des échos plus ou moins affaiblis et déphasés, conséquences des obstacles rencontrés lors de la propagation. Le signal subit globalement une atténuation qui fluctue selon les déplacements du mobile. On distingue deux échelles de fluctuations : les fluctuations rapides, causées par les interférences, et les fluctuations lentes, dues aux modifications de l'environnement ou de la distance station mobile-station de base lorsque le mobile se déplace sur de grandes distances. Ces affaiblissements affectent en premier lieu le rapport signal sur bruit. Mais les trajets multiples engendrent aussi des interférences entre symboles, qui sont d'autant plus marquées que le débit d'information est élevé.

Pour améliorer les performances de la transmission, on peut envisager d'émettre le même signal depuis plusieurs sources différentes (diversité à l'émission) ou de le recevoir en des endroits distincts (diversité à la réception). Quand une des liaisons devient trop affaiblie ou subit une interférence entre symboles trop grande, on utilise une procédure de transfert automatique (en anglais "handover"). On peut aussi imaginer des algorithmes de traitement combinant les signaux provenant de plusieurs voies.

Un nombre croissant de systèmes de transmission à haut débit prévoient d'utiliser la diversité d'espace ou la diversité de polarisation. La microdiversité d'espace (utilisation de plusieurs antennes rapprochées en émission ou en réception) ou la microdiversité de polarisation (émission ou réception en double polarisation) permettent de lutter contre les trajets multiples et les évanouissements rapides. La macrodiversité (liaison entre un mobile et plusieurs stations de base) peut aussi être utilisée à cette fin. Elle permet également de lutter contre les effets de masques et d'adoucir les transitions entre cellules.

Il devient par conséquent indispensable de maîtriser la mesure des caractéristiques de propagation des différents canaux utilisables en diversité pour concevoir et déployer au mieux les nouveaux réseaux.

Les campagnes de mesure en microdiversité au niveau de la station mobile ou en diversité de polarisation au niveau de la station mobile ne posent pas de difficultés particulières. Le signal de sondage du canal est émis depuis la station de base. Les antennes sont disposées sur un véhicule contenant les moyens de réception, ces antennes étant distantes de quelques centimètres en microdiversité d'espace ou superposées en diversité de polarisation. Elles sont reliées à un même dispositif de sondage, qui va par exemple lire alternativement sur l'une et sur l'autre le signal délivré par les antennes. La rotation de la roue du véhicule déclenche les acquisitions du signal. On dit que la configuration est "distance maître". Il est facile de retrouver la position exacte de chaque point de mesure lors du dépouillement des résultats.

La microdiversité au niveau de la station de base et la macrodiversité sont de réalisation beaucoup plus délicate. On peut souligner ces difficultés en distinguant les méthodes "temps maître" et les méthodes "distance maître" :

**a) Les méthodes "temps maître"**

En microdiversité d'espace à la station de base, plusieurs antennes sont distantes de quelques centimètres. En diversité de polarisation, elles sont superposées.

Le canal entre la station mobile et la station de base étant réciproque, on peut très bien émettre le signal depuis la station mobile et le recevoir en diversité à la station de base. Un technicien doit alors être présent en réception pour déclencher le début puis la fin des mesures. Les acquisitions s'effectuent à un rythme régulier : elles sont commandées par une horloge en réception. La méthode est dite "temps maître".

Dans cette configuration, le véhicule doit rouler à vitesse constante pour qu'on puisse reconstituer l'emplacement précis des points de mesure. Cela n'est possible que sur de petits tronçons et certains parcours risquent d'être exclus à cause de la circulation routière.

En macrodiversité, les antennes sont espacées de plusieurs centaines de mètres. Des mesures de canal en "temps maître" nécessitent donc plusieurs dispositifs de sondage, en l'occurrence un à chaque station. Un technicien doit être présent sur chaque site. Les problèmes évoqués précédemment pour la microdiversité subsistent. S'y ajoutent des difficultés à synchroniser les mesures : les instants de déclenchement puis d'arrêt des enregistrements doivent être communs aux différents sites.

**b) Les méthodes "distance maître"**

Différentes méthodes ont été proposées pour effectuer des mesures en diversité à la station de base ou en macrodiversité, sur deux voies, et dans une configuration de type "distance maître".

Une première solution, conceptuellement la plus simple, consiste à émettre le même signal de sondage sur les deux liaisons. On obtient la superposition des réponses impulsionnelles des deux voies. On dissocie ces réponses si elles sont suffisamment décalées dans le temps. Il faut, pour cela, synchroniser les séquences des émetteurs. Cette technique est décrite dans l'article de M. G. KADEL intitulé "Measurement of wideband micro- and macro-diversity characteristics of the mobile radio channel" publié dans IEEE, Proc. of VTC, Stockholm, Suède, 1994, pages 165 à 169.

La synchronisation des séquences est a priori possible en microdiversité ou en diversité de polarisation. Elle est de réalisation complexe en macrodiversité puisqu'on travaille avec deux émetteurs indépendants. On peut toujours décaler aléatoirement les séquences en réinitialisant une séquence de l'un ou l'autre des émetteurs. De toute manière, la bonne synchronisation des émetteurs ne se vérifie qu'en réception en visualisant les pics principaux des réponses impulsionnelles et en constatant leur séparation effective. Ce n'est qu'à cette condition que les mesures d'un tronçon peuvent commencer.

La longueur d'une séquence doit être au moins égale au double de l'étalement des retards des réponses impulsionnelles mesurées. En macrodiversité, les pics des deux réponses impulsionnelles glissent indépendamment l'un de l'autre lors d'un déplacement du mobile. Il faut donc disposer d'une bonne marge de manoeuvre, surtout lorsque la synchronisation est obtenue aléatoirement par réinitialisation d'un émetteur.

La longueur de séquence utilisée en pratique avec cette méthode est de l'ordre de 100 µs. La méthode est difficilement applicable à plus de deux émetteurs, la reconnaissance puis la synchronisation des séquences pouvant se révéler difficile à effectuer.

Un autre problème apparaît en macrodiversité car les oscillateurs des deux émetteurs dérivent indépendamment l'un de l'autre. Ils ne sont pas assujettis à la même horloge et les réponses impulsionnelles calculées risquent à terme de se recouvrir. Les résultats deviennent inexploitables lorsque ces dérives sont importantes, ce qui peut malheureusement advenir alors qu'il est difficile de vérifier la stabilité au moment de la mesure.

Une seconde solution est décrite dans l'article de G. KADEL intitulé "Simulation of the DECT System Using Wideband Chanel Data Measured in Two Diversity Branches, Proceedings of the 2d International Conference on Universal Personnal Communications (ICUPC), Ottawa, p. 546 à 550. Cette solution consiste à décaler la fréquence de la porteuse du second émetteur par rapport à celle du premier. En pratique, on peut introduire un décalage $\Delta f$ d'une vingtaine de Hertz. Le signal composite reçu est démodulé à la fréquence du premier émetteur. Après traitement, on observe les deux réponses impulsionnelles superposées. Le léger décalage en fréquence du second émetteur introduit artificiellement un effet Doppler. La mesure reste de bonne qualité car la durée de la séquence est très courte, au plus 100 µs, comparativement aux 50 ms de la période Doppler. Lorsque le mobile est au repos, les réponses impulsionnelles correspondant à la deuxième voie fluctuent dans le temps, alors que celles de la première ne varient pas. Deux manières de conduire les expériences sont envisageables :

- pour chaque point de mesure, le mobile s'arrête puis lance une série d'enregistrements ; après traitement, on calcule en bande de base le spectre Doppler de chaque retard à partir des réponses successives ; la contribution à ce spectre de la voie 1 est théoriquement d'une raie à la fréquence nulle, celle de la voie 2 d'une raie distance de $\Delta f$ de la première ; le théorème d'échantillonnage est satisfait lorsque les acquisitions ont des occurrences de 25 ms ; un filtrage passe bas en bande de base isole l'information de l'une ou de l'autre voie ;

- lorsque le mobile avance très lentement, on peut supposer que l'effet Doppler artificiel l'emporte sur l'effet Doppler réel ; il est alors envisageable d'effectuer les acquisitions au cours du déplacement et toujours à intervalles de temps réguliers ; la contribution de chaque voie au spectre Doppler d'un retard donné n'est plus une simple raie ; elle reste toutefois centrée autour de cette raie ; par précaution, en pratique les acquisitions doivent être inférieures à 25 ms; pour éviter un recouvrement en fréquence de deux voies, la vitesse du mobile est limitée à 1 m/s (4 km/h).

Cette méthode présente, elle aussi, de nombreux inconvénients. Tout d'abord, elle n'offre pas une solution "distance maître" pratique. Elle impose ,en effet, de s'arrêter à chaque point de mesure dans la première version, ou de rouler très lentement (4 km/h) à vitesse uniforme dans la seconde. De plus, la séparation des voies entraîne une lourdeur des calculs. Chaque échantillon d'une réponse impulsionnelle s'obtient par filtrage de l'information observée sur une centaine d'acquisitions consécutives et à un retard donné. Cette opération doit être répétée pour chaque échantillon de la séquence reçue, donc une bonne centaine de fois. La complexité du traitement en réception est multipliée par un facteur 10 000 au moins par rapport à une méthode de mesure sans diversité.

Lorsque les mesures sont déclenchées toutes les 25 ms, le temps nécessaire à l'acquisition d'une centaine de séquences prend plus de deux secondes. Il faut donc supposer le canal stationnaire sur cette durée. Une telle hypothèse risque de ne pas être vérifiée lorsque des véhicules sont en mouvement à proximité du mobile.

Le but de la présente invention est justement de remédier à ces inconvénients de l'état de la technique. Elle propose un procédé de type "distance maître" permettant l'analyse simultanée de plusieurs canaux sur une même bande, tout en alliant facilité de mise en oeuvre et simplicité de traitement des signaux. L'invention est mise en oeuvre de manière à observer les réponses impulsionnelles sur une durée T adaptée à l'environnement à sonder.

**Exposé de l'invention**

Le procédé de l'invention ne nécessite pas de réinitialiser la séquence d'un des émetteurs ni de suivre au cours du temps les décalages entre séquences. Il fonctionne en temps réel : une mesure à un certain instant permet de calculer les réponses impulsionnelles des canaux à cet instant. Il est très économique en temps de calcul : sa complexité est celle des techniques de mesure sans diversité, multipliée par le nombre de canaux.

Les mesures étant commandées en distance, le véhicule n'est plus astreint à se déplacer à vitesse uniforme. La reconstitution des parcours ne pose donc pas problème majeur. Il n'est plus nécessaire de mobiliser un technicien pour déclencher les mesures sur chaque site. On évite également les problèmes de synchronisation évoqués au sujet de la macrodiversité.

De façon précise, la présente invention a pour objet un procédé de mesure simultanée, sur une durée d'observation T, des caractéristiques de propagation d'une pluralité de p canaux radioélectriques (p entier au moins égal à 2) entre p stations de base et une station mobile, caractérisé en ce que :

- on émet simultanément depuis chacune des stations de base un signal périodique de période pT, le signal émis par la station de rang n (n allant de 1 à p) ayant un spectre constitué de raies situées aux fréquences $(k/T)+((n-1)/pT)$ où k est le numéro de la raie,
- on reçoit simultanément les p signaux émis par les p stations dans la station mobile et on traite les signaux reçus dans une fenêtre temporelle de largeur pT pour extraire les p réponses impulsionnelles des p canaux radioélectriques.

Pour émettre depuis la $n^{ième}$ station les signaux en question, on peut s'y prendre comme suit :

- on produit une séquence d'éléments de durée T,
- on reproduit cette séquence avec une période T pour obtenir un signal périodique de période T,
- on produit une onde porteuse ayant une fréquence égale à la fréquence centrale Fc de la bande de fréquence à analyser,
- on décale la fréquence de l'onde porteuse de la quantité $(n-1)/pT$,
- on émet le signal obtenu après modulation de la porteuse ainsi décalée.

De préférence, on réduit la bande des signaux émis par filtrage pour limiter la bande à une largeur B, les spectres des signaux émis s'étendant de -B/2 (inclusivement) à B/2 (exclusivement) et le nombre k prenant ainsi toutes les valeurs entières comprises entre -N (inclus) et N-1 (inclus) où N est égal à BT/2 (qu'on supposera entier).

Pour obtenir les signaux à émettre par les stations de base, on peut aussi lire des mémoires contenant des échantillons appropriés des signaux ayant les spectres en question.

Pour ce qui est du traitement effectué dans la station mobile, de préférence, on échantillonne le signal reçu à une fréquence d'échantillonnage au moins égale à la largeur B de la bande utilisée à l'émission.

Pour obtenir la réponse impulsionnelle de chaque canal, on peut s'y prendre comme suit :

a) on détermine :

- l'amplitude des raies situées aux fréquences k/T pour obtenir un premier spectre,
- l'amplitude des raies aux fréquences $k/T+(n-1)/pT$ pour obtenir un $n^{ième}$ spectre,
- l'amplitude des raies aux fréquences $k/T+(p-1)/pT$ pour obtenir un $p^{ième}$ spectre,

b) on calcule, pour chaque spectre, le rapport de l'amplitude de ses raies à l'amplitude des raies correspondantes du signal émis,

c)on effectue une transformation de Fourier inverse des différents rapports obtenus.

On peut aussi s'y prendre autrement en corrélant, sur une fenêtre de durée pT, le signal reçu avec les différents signaux émis par la première, ..., la $n^{ième}$, ..., la $p^{ième}$ station de base, pour obtenir la réponse impulsionnelle du premier, ..., du $n^{ième}$, ..., du $p^{ième}$ canal.

Le procédé qui vient d'être défini s'applique quel que soit le nombre de canaux. Dans le cas particulier où ce nombre est égal à 2, le procédé est tel que :

- le signal émis par l'une des stations présente un spectre de raies aux fréquences k/T,
- le signal émis par l'autre station présente un spectre de raies aux fréquences (k/T)+(1/2T),
- le signal reçu par la station mobile est traité dans une fenêtre de largeur 2T.

**Brève description des dessins**

- la figure 1 montre schématiquement un système de radiocommunications à plusieurs stations de base et à une station mobile ;
- les figures 2A et 2B illustrent une séquence d'éléments binaires et le spectre correspondant après filtrage ;
- les figures 3A et 3B illustrent une séquence reçue et le spectre correspondant après filtrage ;
- la figure 4 montre l'allure d'une réponse impulsionnelle ;
- la figure 5 montre un exemple de séquences d'éléments binaires formant un signal périodique ;
- la figure 6A montre une première onde porteuse et la figure 6B une seconde onde porteuse obtenue à partir de la première par décalage en fréquence de 1/2T ;
- la figure 7A montre le spectre $S_1$(f) d'un premier signal émis par une première station de base et la figure 7B le spectre de raies $S_2$(f) d'un second signal émis par une seconde station de base ;
- la figure 8 illustre un premier mode de réalisation des moyens permettant d'engendrer les deux signaux émis par les stations de base ;
- la figure 9 illustre un second mode de réalisation des moyens permettant d'engendrer les deux signaux émis les stations de base ;
- les figures 10A et 10B montrent l'influence d'une fenêtre de largeur 2T appliqué à un signal ;
- les figures 11A, 11B, 11C et 11D illustrent différents signaux apparaissant dans le traitement fréquentiel du signal ;
- la figure 12 montre un exemple de deux réponses impulsionnelles dans le cas où les stations de base sont visibles de la station mobile ;
- la figure 13 montre un autre exemple de deux réponses impulsionnelles, dans le cas où les stations de base ne sont pas visibles de la station mobile.

**Exposé détaillé de modes particuliers de réalisation**

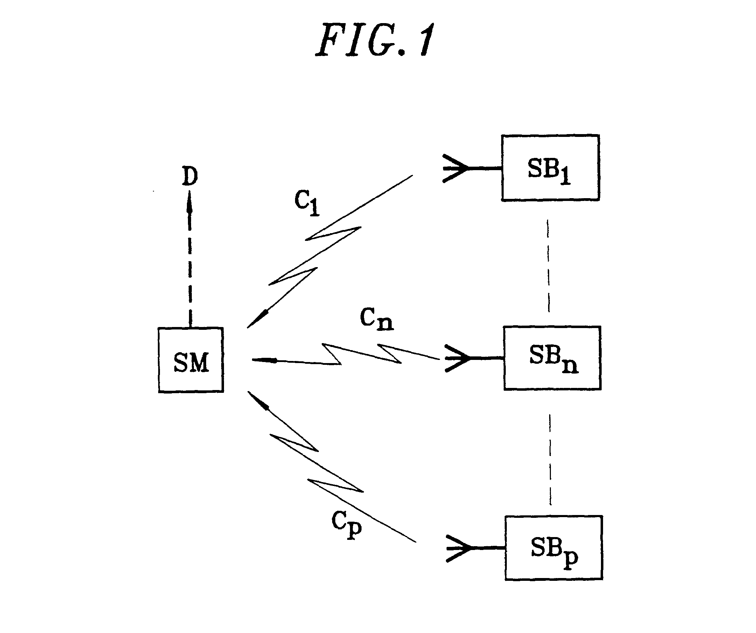

La figure 1 montre schématiquement un système de radiocommunications comprenant p stations de base $SB_1$, ..., $SB_n$, ..., $SB_p$ et une station mobile SM se déplaçant dans la direction D. Une pluralité de p canaux radioélectriques $C_1$, ..., $C_n$, ..., $C_p$ sont ainsi définis entre les stations de base et la station mobile. L'invention se propose de mesurer la réponse impulsionnelle de chacun de ces p canaux, et cela de manière simultanée.

Avant de décrire comment on procède, il n'est peut être pas inutile de rappeler quelques principes généraux du traitement de signal dans le cadre des télécommunications.

Un canal radioélectrique peut être considéré comme un filtre linéaire. On sait qu'on peut définir, pour de tels filtres, une réponse impulsionnelle, qui est la réponse du filtre à un signal d'entrée qui serait une impulsion de Dirac. La notion de réponse impulsionnelle est particulièrement utile parce qu'elle permet de calculer la réponse y(t) du filtre à n'importe quel signal d'entrée x(t). On a en effet :

$$y(t)=(x*h)(t) \tag{1}$$

où h(t) est la réponse impulsionnelle et où le signe * représente un produit de convolution.

Si X(f), Y(f) et H(f) représentent les transformées de Fourier respectivement de x(t), y(t) et h(t), on a la relation équivalente suivante :

$$Y(f)=X(f) \cdot H(f) \qquad (2)$$

que l'on peut encore écrire aux fréquences où X ne s'annule pas :

$$H(f)=Y(f)/X(f) \qquad (3)$$

Dans l'hypothèse où x présente de bonnes propriétés d'autocorrélation, la relation (1) s'écrit encore :

$$(y* \overset{\bar{v}}{x})(t) = ((x*h)* \overset{\bar{v}}{x})(t) = (h*(x*\overset{\bar{v}}{x}))(t) = (h*\delta)(t) = h(t) \qquad (4)$$

où $\bar{x}=x(-t)$, où le signe - désigne la conjugaison complexe et où le symbole $\delta$ représente la distribution de Dirac.

On peut ainsi obtenir la réponse impulsionnelle h(t) d'un canal radioélectrique de deux manières différentes :

- connaîssant les spectres X(f) et Y(f), on calcule le rapport Y(f)/X(f), ce qui donne H(f) par la relation (3) ; par transformation de Fourier inverse, on remonte à h(t) ;
- à partir des signaux émis et reçu, on effectue une convolution $(y* \overset{\bar{v}}{x})$ (t), ce qui donne directement h(t) par la relation (4).

La première méthode est dite "fréquentielle" (ou encore par inversion, sous-entendu de la transformation de Fourier) ; la seconde est dite "temporelle".

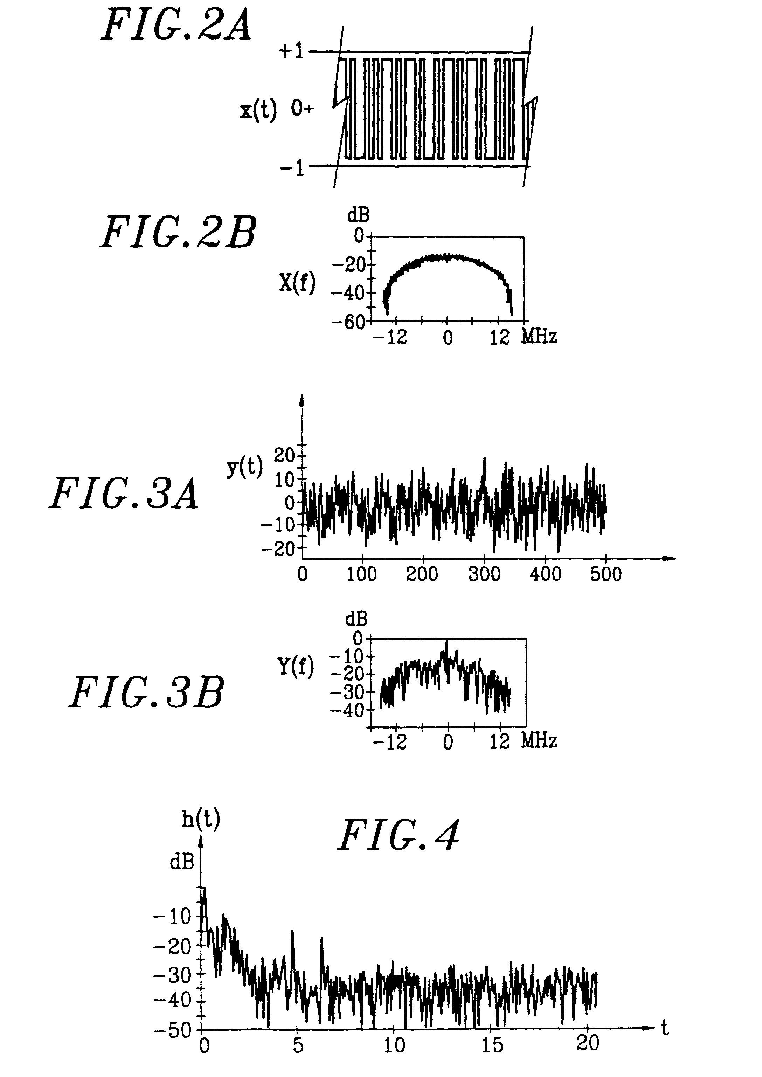

Les figures 2A, 2B, 3A, 3B et 4 illustrent l'allure de quelques signaux et de quelques spectres dans cette technique et permettent d'illustrer ces deux méthodes. La figure 2A, tout d'abord, montre une séquence x(t) d'éléments binaires prenant les valeurs +1 et -1 pendant une durée qui est ici, à titre d'exemple, de 500 $\mu$s. La figure 2B montre le spectre X(f) après filtrage. Il s'étend sur environ 30 MHz. Lorsqu'un tel signal module une porteuse (non représentée), il est reçu et démodulé pour donner un signal y(t) illustré sur la figure 3A ; le spectre Y(f) correspondant est illustré sur la figure 3B.

Pour obtenir la réponse impulsionnelle h(t) du canal ayant transmis ce signal, on peut donc s'y prendre de deux manière différentes comme expliqué plus haut :

- par la méthode fréquentielle : disposant du spectre X(f) du signal émis et du spectre Y(f) du signal reçu, on calcule le rapport Y(f)/X(f), ce qui donne H(f) ; puis, par transformation de Fourier inverse, on remonte à la réponse impulsionnelle h(t) ;
- par la méthode temporelle : connaissant le signal reçu y(t) et le signal émis x(t), on effectue le produit de convolution $(y* \overset{\bar{v}}{x})$ (t), ce qui donne directement la réponse impulsionnelle recherchée h(t).

Ces rappels étant effectués, on peut en venir à l'invention proprement dite. Elle sera décrite dans le cas particulier de deux canaux, mais l'extension à un nombre quelconque de canaux est immédiate.

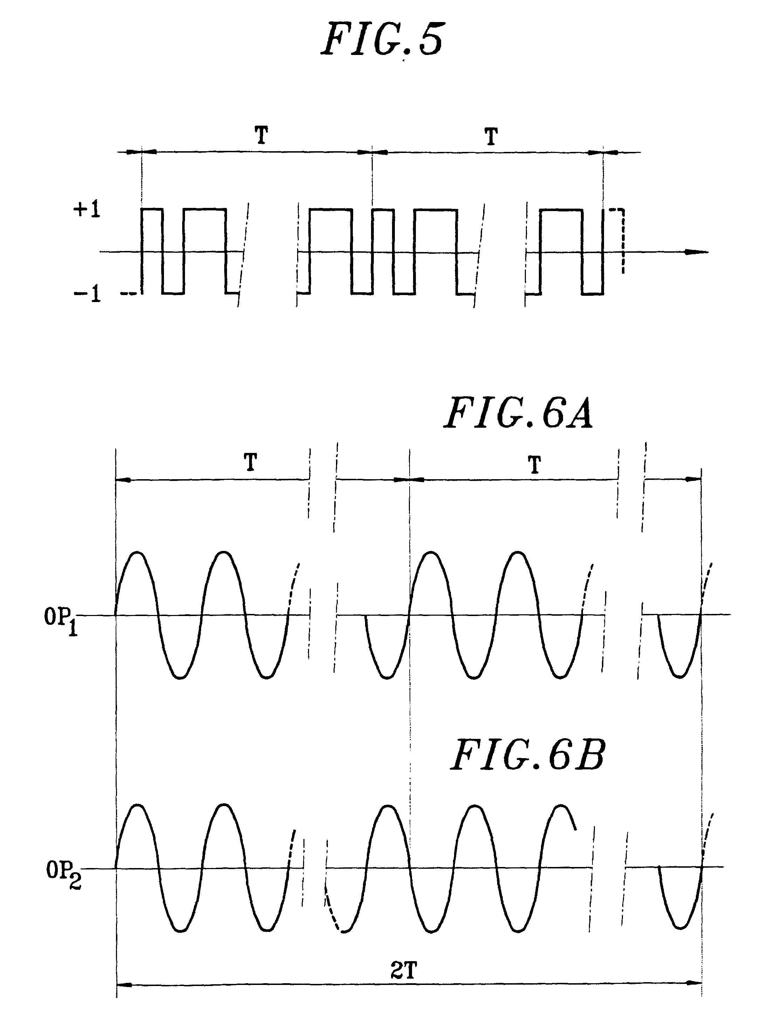

Dans un mode particulier de mise en oeuvre, on commence par produire une séquence d'éléments binaires de durée T comme la séquence illustrée à titre d'exemple sur la figure 5. Les éléments binaires sont égaux à +1 ou à -1 mais, naturellement, il pourrait s'agir d'une suite de 1 et de 0. La durée T peut être de quelques dizaines de microsecondes, par exemple 20 $\mu$s.

La séquence de durée T est répétée à l'identique. On obtient ainsi un signal périodique de période T dont deux périodes sont illustrées sur la figure 5.

Une onde porteuse est ensuite créée, dont l'allure est représentée sur la figure 6A. Cette porteuse $0P_1$ possède une certaine fréquence $f_0$. Cette valeur peut être par exemple de 2,2 GHz. L'échelle des temps sur la figure 6A est donc sans rapport avec l'échelle des temps de la figure 5. Cette onde porteuse est décalée en fréquence de la quantité 1/2T pour constituer une seconde onde porteuse $OP_2$ (figure 6B). Après une période T, cette seconde porteuse $OP_2$ est en opposition de phase avec la première $OP_1$, mais se retrouve en phase avec celle-ci après un intervalle 2T.

Le signal périodique de la figure 5 module à la fois la première porteuse $OP_1$ et la seconde $OP_2$. Les signaux obtenus $s_1(t)$ et $s_2(t)$ sont de périodicité T pour le premier et 2T pour le second.

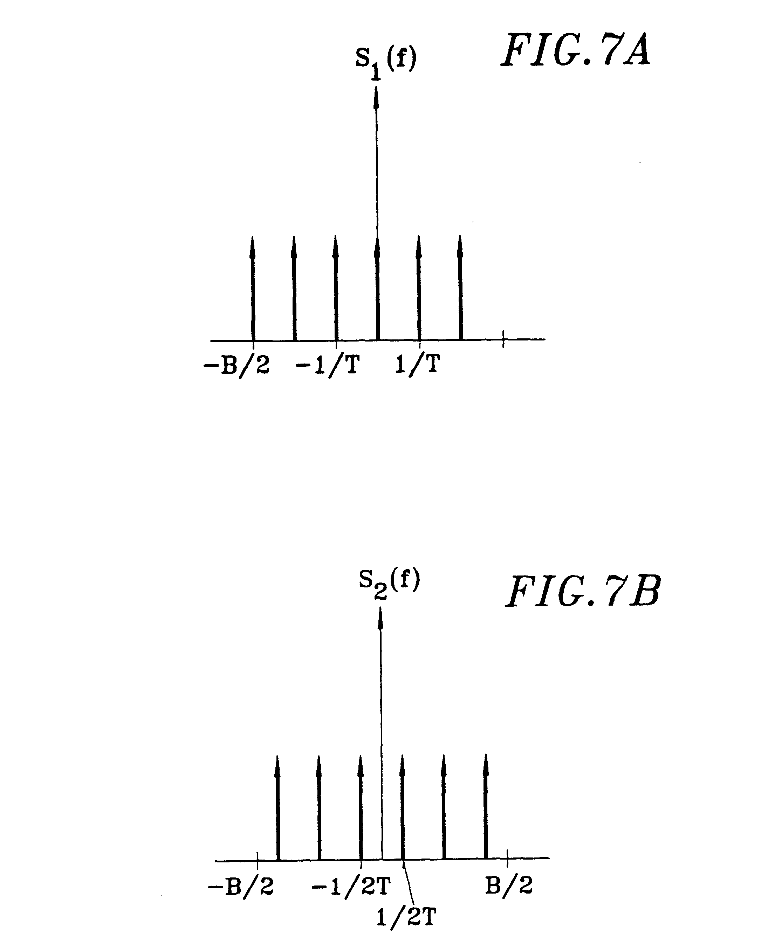

Les spectres en bande de base (c'est-à-dire autour de la fréquence centrale $f_0$) sont représentées sur les figures 7A et 7B. Comme le signal de la figure 5 est périodique de période T, le spectre $S_1(f)$ correspondant à la porteuse $OP_1$ est formé de raies aux fréquences k/T où k est entier. Pour la porteuse $OP_2$, le spectre $S_2(f)$ est décalé en fréquence de 1/2T mais il est toujours constitué de raies distantes de k/T. Les raies sont donc situées à (k/T)+(1/2T).

Les spectres $S_1(f)$ et $S_2(f)$ peuvent être limités à une bande de valeur B, par exemple au moyen d'un filtrage à l'émission. Ils s'étendent alors de -B/2 (inclusivement) à B/2 (exclusivement). (En pratique, on applique au signal reçu une fenêtre de Hamming en fréquence). Si l'on pose N/T=B/2, le nombre k prend toutes les valeurs entières entre -N et N-1 (bornes incluses).

Les spectres des deux signaux émis par les deux stations de base sont donc entrelacés.

Si l'on multiplie l'un des signaux périodiques par l'autre et si l'on fait la somme des produits obtenus sur la durée 2T (qui est le plus petit commun multiple des périodes) on obtiendra des quantités opposées dans les deux périodes de durée T, de sorte que la somme sur 2T sera nulle. On peut donc dire que les deux signaux émis sont "orthogonaux".

On comprend ainsi que, selon l'invention, chaque signal émis par une station de base possède une signature, en l'occurrence spectrale, qui le distingue du signal émis par l'autre station. Comme, en outre, les signaux émis sont orthogonaux les uns aux autres, ils ne se mélangent pas et gardent leur individualité. On pourra ainsi suivre leur propagation à travers les deux canaux.

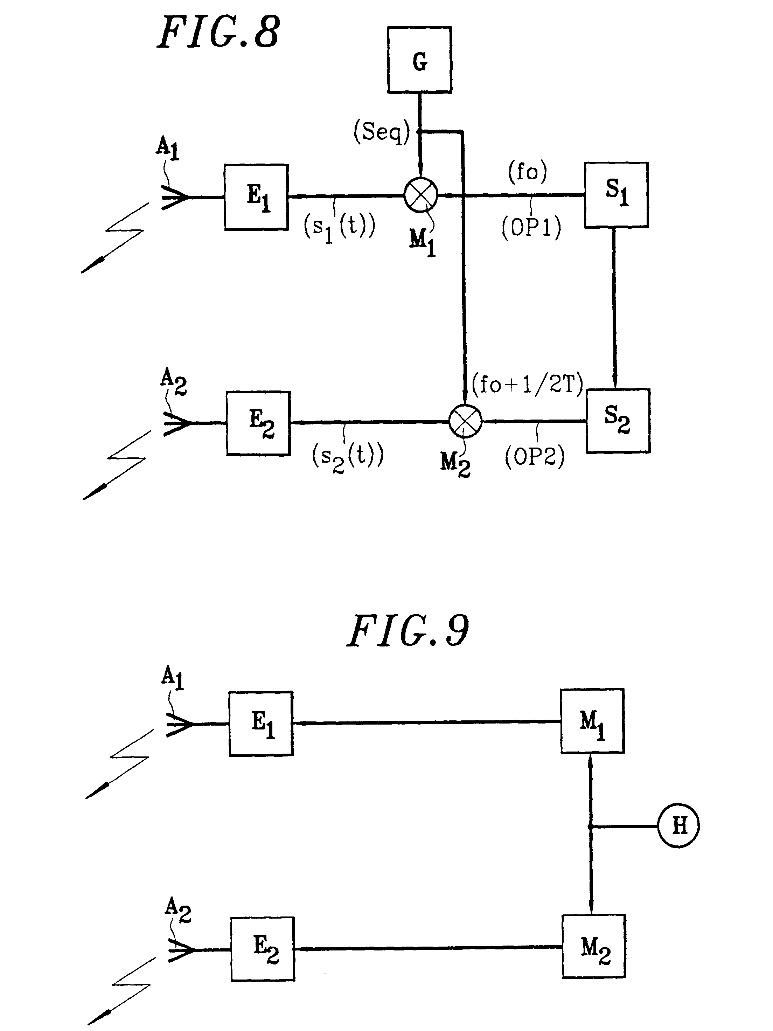

Les figures 8 et 9 montrent deux moyens de formation et d'émission des signaux $s_1(t)$ et $s_2(t)$ par les deux stations de base. Sur la figure 8, tout d'abord, on voit deux synthétiseurs $S_1$, $S_2$ délivrant les ondes porteuses $OP_1$ et $OP_2$, la seconde étant décalée en fréquence de 1/2T par rapport à la première ; on voit encore un générateur de séquence pseudo-aléatoire G, deux multiplieurs $M_1$, $M_2$ recevant les deux ondes porteuses et la séquence ; ces multiplieurs délivrent les deux signaux $s_1(t)$, $s_2(t)$ ; enfin, deux émetteurs $E_1$, $E_2$ amplifient ces signaux pour leur donner une puissance appropriée et deux antennes $A_1$, $A_2$ émettent les ondes radioélectriques en direction de la station mobile.

La figure 9 montre une variante où des échantillons des signaux $s_1(t)$ et $s_2(t)$ ont été inscrits dans deux mémoires $M_1$ et $M_2$, lesquelles sont lues au rythme d'une horloge H. Deux émetteurs $E_1$, $E_2$ reliés à deux antennes $A_1$, $A_2$ permettent encore l'émission radioélectrique.

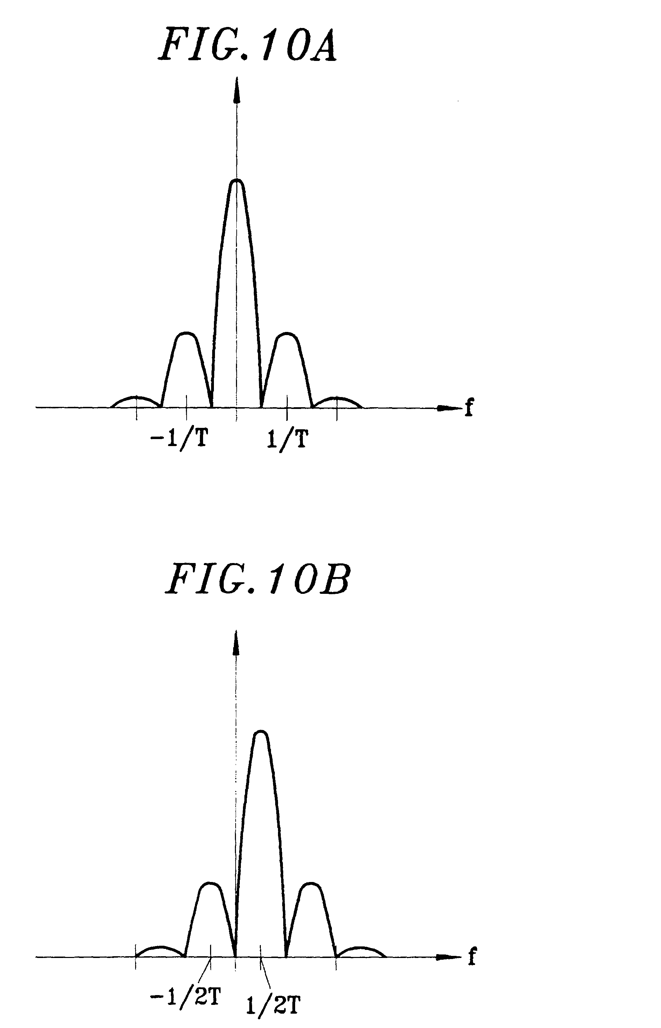

Les signaux $s_1(t)$ et $s_2(t)$ ayant été ainsi émis, il reste à les recevoir dans la station mobile et à les traiter pour restituer la réponse impulsionnelle de chaque canal. Comme il a déjà été indiqué, le signal reçu est observé dans une fenêtre temporelle de durée 2T. On sait que la limitation temporelle d'un signal entraîne un filtrage en fréquence selon une fonction du type $\sin(\pi f\tau)/\pi f\tau$ où $\tau=2T$. Cette fonction est dite "sinus cardinal". Chaque raie d'un signal ainsi limité se trouve étalée en fréquence comme représenté sur la figure 10A pour une raie située à au centre de la bande comme c'est le cas pour la raie centrale du signal $s_1(t)$ émis par la première station ; la figure 10B montre le même phénomène pour une raie du second signal située à 1/2T. On observe que le lobe principal de l'un des sinus cardinaux coïncide avec un zéro de l'autre et vice versa. Cet entrelacement se produit pour toutes les raies des deux signaux de sorte que les spectres des deux signaux ne se mélangent pas à la réception.

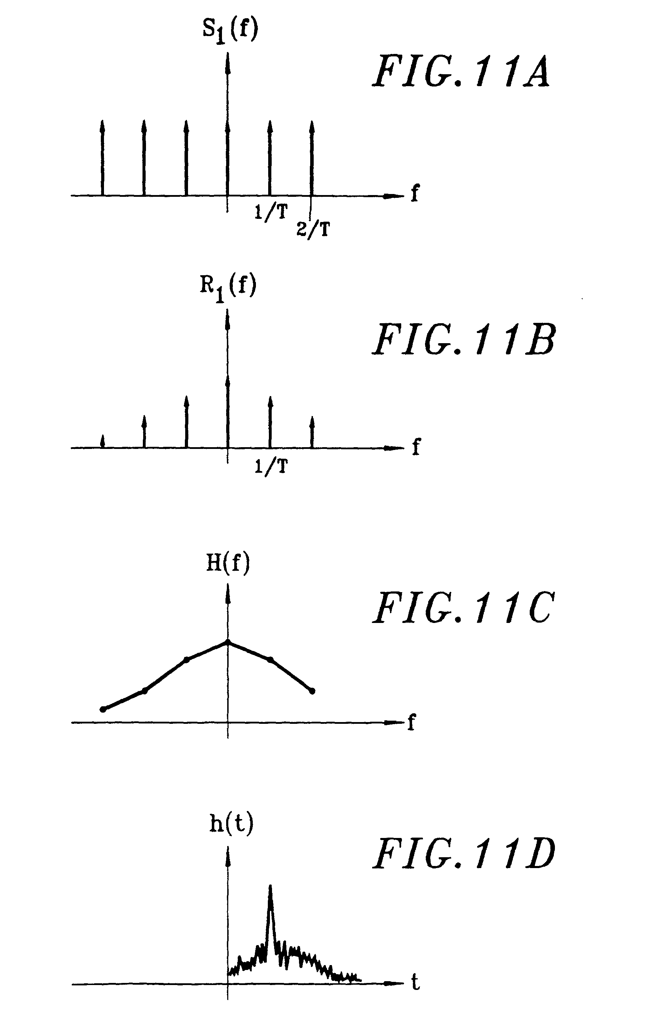

Les figures 11A à 11D représentent schématiquement quelques signaux intervenant dans un mode de traitement fréquentiel. La figure 11A, tout d'abord, montre le spectre du premier signal, soit $S_1(f)$, à l'émission, qui est aussi le spectre du signal qui serait reçu si l'émetteur et le récepteur étaient reliés par un câble idéal. La figure 11B montre le spectre $R_1(f)$ effectivement reçu. Le rapport d'amplitude complexe des raies donne la fonction H(f) de la figure 11C. Par transformée de Fourier inverse (par exemple par TFD inverse), on revient en temps pour obtenir la réponse impulsionnelle h(t) du premier canal, comme illustré sur la figure 11D.

On peut écrire de manière synthétique :

$$h_1(t)=TFD^{-1}[R_1(k/T)/S_1(k/T)].$$

De même pour le second canal, on calcule :

$$h_2(t)=TFD^{-1}[R_2((k/T)+(1/2T))/S_2((k/T+1/2T))].$$

Au lieu d'utiliser la transformée de Fourier discrète TFD, on peut utiliser la transformée de Fourier rapide (FFT) ce qui accélère les calculs. Sa msie en oeuvre est facilitée lorsque le nombre p d'émetteurs et l'entier N relatif au nombre de raies sont en puissance de deux. Un ajustement des paramètres B et T permet d'obtenir un entier N convenable. Si le nombre p de stations de base n'est pas en puissance de deux, on détermine l'entier p' en puissance de deux supérieur à p et le plus proche de p. On applique la méthode décrite avec cette nouvelle valeur, étant entendu que p'-p stations de base ne délivrent aucun signal et sont virtuelles.

Par exemple, avec 6 stations de base, on considèrera 2 stations virtuelles pour porter le nombre de stations à 8, puissance exacte de 2 et l'on effectuera tous les traitements comme s'il y avait 8 stations (c'est-à-dire $2^3$), sachant qu'en réalité 2 de ces stations sont virtuelles.

La variante qui vient d'être décrite est de type fréquentiel. On pourrait mettre en oeuvre aussi une variante temporelle en effectuant une corrélation entre les signaux émis et reçus. On fait passer le signal reçu au travers d'un banc de deux filtres numériques adaptés au motif (de durée 2T) émis depuis chaque voie. On observe en sortie des filtres deux copies consécutives des réponses impulsionnelles du canal de transmission (émission-propagation-réception). La première copie est une version non déphasée de la réponse impulsionnelle attendue et la seconde est déphasée de la quantité -π. Par troncature, on extrait la réponse impulsionnelle estimée sur la durée T et échantillonnée à la fréquence B.

De manière plus générale, si au lieu de deux canaux il en existe p, pour le traitement de la voie de rang n 1<n<p), on peut au choix :

■ ne conserver que les 2N raies d'information aux fréquences (k/T)+(n-1)/pT ; centrer la raie correspondant à la fréquence (n-1)/pT ; calculer le rapport de l'amplitude complexe des raies à l'amplitude complexe des raies du signal reçu correspondant lorsqu'émetteur et récepteur sont reliés par un câble idéal ; revenir en temps par TFD inverse, puis corriger d'une quantité $e^{j2\pi(n-1)t/pT}$ ; on récupère ainsi une estimée de la réponse impulsionnelle du $n^{ième}$ canal de propagation sur la durée T et échantillonnée à la fréquence B ;

■ conserver toutes les 2Np raies, en substituant la valeur nulle aux 2N(p-1) raies non informatives ; revenir en temps par TFD inverse ; à un terme de déphasage près, on observe p copies consécutives de la $n^{ième}$ réponse impulsionnelle, d'une durée totale de pT ; la première copie est une version non déphasée de la réponse impulsionnelle attendue, la $k^{ième}$ copie est déphasée de la quantité $\frac{-2\pi(n-1)(k-1)}{p}$, enfin la $p^{ième}$ est déphasée de la quantité $\frac{-2\pi(n-1)(p-1)}{p}$ ; par troncature, on extrait la réponse imulpulsionnelle estimée sur la durée T et échantillonnée à la fréquence B.

Pour la méthode temporelle, on fera passer le signal reçu au travers d'un banc de p filtres numériques adaptés au motif (de durée pT) émis depuis chaque voie. A un terme de déphasage près, on observe en sortie du $n^{ième}$ filtre p copies consécutives de la $n^{ieme}$ réponse impulsionnelle du canal de transmission (émission+propagation+réception). La première copie est une version non déphasée de la réponse impulsionnelle attendue, la $n^{ieme}$ est déphasée de la quantité -2π(n-1)/pT, enfin, la $p^{ième}$ est déphasée de la quantité -2π(p-1)/pT. Par troncature, on extrait la réponse impulsionnelle estimée sur la durée T et échantillonnée à la fréquence B.

A titre explicatif, on va décrire maintenant une expérimentation réalisée en macrodiversité avec deux émetteurs.

La première source émet périodiquement, au débit de 12,5 Mbits/s, une séquence de 255 bits. Ce signal module une porteuse à la fréquence 2,2 GHz puis est filtré et amplifié. La bande analysée est centrée autour de 2,2 GHz et large d'au plus 25 MHz avec N=255. La période T vaut 20,4 μs. Le décalage en fréquence de la voie 2 vaut donc 1/2T=24,451 kHz. On observera accessoirement que ce décalage est très grand par rapport à la vingtaine de Hertz que l'on rencontrait dans l'art antérieur après introduction d'un effet Doppler artificiel. Le décalage en fréquence peut être réalisé lors de la modulation en utilisant des synthétiseurs aux fréquences respectives $f_0$ et $f_0$+1/2T (figure 8). Il peut aussi être obtenu en déphasant préalablement de πt/2T une séquence mémorisée en bande de base par le deuxième émetteur pendant la durée 2T. Cette séquence, lue avec la périodicité 2T et modulant en amplitude une porteuse de fréquence $f_0$ donne le signal attendu. Dans cette configuration, les synthétiseurs délivrent tous deux la même fréquence $f_0$.

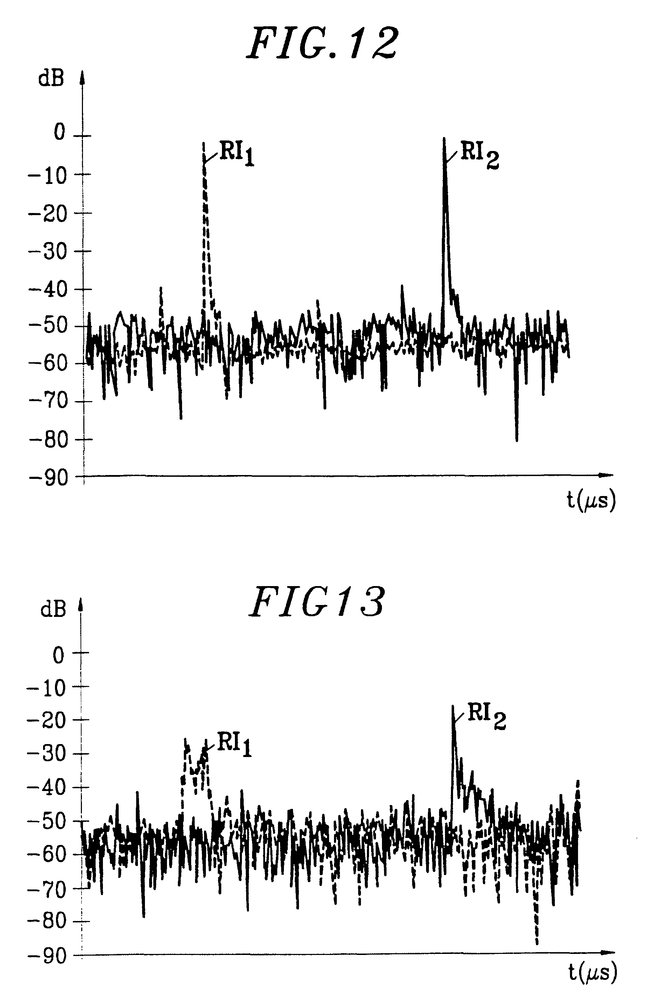

Dans un premier temps, les deux sources radioélectriques sont disposées au même endroit et sont visibles de la station mobile. On obtient, après traitement, deux réponses identiques (et décalées) ce qui valide l'expérimentation. C'est ce qui est représenté sur la figure 12. Les émetteurs sont ensuite placés au-dessus des toits et éloignés de 600 mètres, configuration typique de macrodiversité en petite cellule urbaine. La puissance utile émise par chaque source est d'environ 40 dBm. Le récepteur est situé sur le véhicule mobile. Une acquisition dure 40,6 μs et implique 1020 échantillons. Les points de mesure sont espacés de 2 cm environ et les parcours sont longs d'une soixante de mètres. Un exemple de couple de réponses impulsionnelles mesurées par ce procédé est donné en figure 13. Il atteste d'une excellente dynamique des réponses calculées.

Le dispositif de réception peut comporter un circuit de contrôle automatique de gain pour adapter la puissance du signal reçu à l'électronique du récepteur. Pour éviter une distorsion trop importante de l'une des voies, il est préférable que les signaux issus des deux liaisons parviennent au récepteur avec des niveaux de puissance moyenne comparables. Cela peut être obtenu en effectuant au préalable des mesures de champs moyens en bande étroite, puis en ajustant en conséquence les puissances d'émission. Cette précaution est d'ailleurs valable quel que soit le procédé de mesure de type "distance maître" avec diversité.

Un biais sur la fréquence porteuse d'un des émetteurs par rapport à la valeur nominale ou un glissement du débit à l'émission d'une des voies peut altérer les performances de la chaîne. Ces deux défauts entraînent un empiétement des sinus cardinaux les uns sur les autres aux fréquences k/2T et ont été étudiés en simulation. Les dégradations sont perceptibles pour des erreurs de fréquence porteuse au-delà de la centaine de Hertz, donc de l'ordre du centième de l'écartement entre raies, et une imprécision sur la durée T supérieure à la vingtaine de nanosecondes, donc de l'ordre du centième de la période d'échantillonnage. Ces marges sont amplement respectées par les matériels disponibles.

## Revendications

1. Procédé de mesure simultanée, sur une durée d'observation T, des caractéristiques de propagation d'une pluralité de p canaux radioélectriques, p entier au moins égal à 2, entre p stations de base et une station mobile, **caractérisé en ce que** :

   - on émet simultanément depuis chacune des stations de base un signal périodique de période pT, le signal émis par la station de rang n, n allant de 1 à p, ayant un spectre constitué de raies situées aux fréquences $(k/T)+((n-1)/pT)$ où k est le numéro de la raie,
   - on reçoit simultanément les p signaux émis par les p stations dans la station mobile et on traite les signaux reçus dans une fenêtre temporelle de largeur pT pour extraire les p réponses impulsionnelles des p canaux radioélectriques.

2. Procédé selon la revendication 1, dans lequel, pour l'émission au niveau de la $n^{ième}$ station :

   - on produit une séquence d'éléments de durée T,
   - on reproduit cette séquence avec une période T pour obtenir un signal périodique de période T,
   - on produit une onde porteuse ayant une fréquence égale à la fréquence centrale $F_o$ de la bande de fréquence à analyser,
   - on décale la fréquence de l'onde porteuse de la quantité $(n-1)/pT$,
   - on émet le signal obtenu après modulation de la porteuse ainsi décalée.

3. Procédé selon la revendication 2, dans lequel on réduit la bande des signaux émis par filtrage pour limiter la bande à une largeur B, les spectres des signaux émis s'étendant de -B/2 inclusivement à B/2 exclusivement et le nombre k prenant ainsi toutes les valeurs entières comprises entre -N compris et N-1 compris où N est égal à BT/2.

4. Procédé selon les revendications 1 ou 2, dans lequel, pour obtenir les signaux à émettre par les stations de base, on lit des mémoires contenant des échantillons des signaux ayant les spectres en question.

5. Procédé selon la revendication 3, dans lequel, avant traitement des p signaux reçus dans la station mobile, on échantillonne lesdits signaux reçus préalablement démodulés à la fréquence Fo.

6. Procédé selon la revendication 5, dans lequel, dans la station mobile, ledit traitement consiste à :

   a)déterminer l'amplitude des raies aux fréquences $(k/T)+((n-1)/pT)$ pour obtenir p spectres $(R_n(f))$,
   b)calculer, pour chaque spectre, le rapport de l'amplitude de ses raies à l'amplitude des raies correspondantes du signal émis,
   c)effectuer une transformation de Fourier inverse des différents rapports obtenus.

7. Procédé selon la revendication 5, dans lequel, dans la station mobile, ledit traitement consiste à corréler le signal reçu avec les différents signaux émis par les p stations de base pour obtenir ainsi les réponses impulsionnelles respectives des p canaux.

8. Procédé selon la revendication 7, dans lequel :

   - on fait passer les signaux reçus démodulés et échantillonnés au travers d'un banc de p filtres numériques adaptés aux signaux périodiques de durée pT,
   - on recueille à la sortie du $n^{ième}$ filtre, p copies consécutives de la réponse impulsionnelle du $n^{ième}$ canal, la première copie étant une version non déphasée de la réponse impulsionnelle recherchée.

9. Procédé selon l'une quelconque des revendications 1 à 8, dans lequel le nombre p de stations de base n'étant pas égal à une puissance de 2, on détermine l'entier p' supérieur à p et le plus proche de p et qui est une puissance de 2, et on met en oeuvre le procédé comme s'il y avait p' stations de base, p'-p de ces stations étant virtuelles et ne délivrant aucun signal.

**Patentansprüche**

1. Verfahren zum gleichzeitigen Messen, in einer Beobachtungszeit T, von Ausbreitungseigenschaften mehrerer radioelektrischer bzw. Funkkanäle p, wobei p eine ganze Zahl mindestens gleich 2 ist, zwischen p Basisstationen und einer mobilen Station, **dadurch gekennzeichnet, dass**:

   gleichzeitig von jeder der Basisstationen ein periodisches Signal der Periode pT emittiert wird, wobei das von der Station vom Rang n emittierte Signal, wobei n von 1 bis p reicht, ein Spektrum aufweist, das aus Spektrallinien gebildet ist, die bei Frequenzen (k/T) + ((n-1)/pT) gelegen ist, wobei k die Nummer der Spektrallinie ist, gleichzeitig in der mobilen Station die von den p Stationen emittierten p Signale empfangen werden und die empfangenen Signale in einem Zeitfenster der Breite pT behandelt werden, um die p Impulsantworten der p radioelektrischen bzw. Funkkanäle zu extrahieren.

2. Verfahren nach Anspruch 1, wobei für die Emission an der n-ten Station:

   eine Sequenz von Elementen der Dauer T erzeugt wird,
   diese Sequenz mit einer Periode T reproduziert wird, um ein periodisches Signal der Periode T zu erhalten,
   eine Trägerwelle des zu analysierenden Frequenzbands mit einer Frequenz gleich der zentralen Frequenz F erzeugt wird,
   die Frequenz der Trägerwelle um die Größe (n-1)/pT versetzt bzw. verschoben wird,
   das erhaltene Signal nach Modulation der so versetzten bzw. verschobenen Trägerwelle emittiert wird.

3. Verfahren nach Anspruch 2, wobei das Band der emittierten Signale durch Filtern reduziert wird, um das Band auf eine Breite B zu begrenzen, wobei sich die Spektren der emittierten Signale, die von -B/2 inklusive bis B/2 exklusive erstrecken, und die Zahl k dabei alle ganzzahligen Werte annimmt, die zwischen -N einschließlich und N-1 einschließlich liegen, wobei N gleich BT/2 ist.

4. Verfahren nach Anspruch 1 oder 2, wobei, um die von den Basisstationen zu emittierenden Signale zu erhalten, Speicher gelesen werden, die Abtastwerte der Signale enthalten, welche die in Frage kommenden Spektren aufweisen.

5. Verfahren nach Anspruch 3, wobei vor der Behandlungbzw. Bearbeitung der in der mobilen Station empfangenen p Signale die vorher mit der Frequenz Fo demodulierten Signale abgetastet werden.

6. Verfahren nach Anspruch 5, wobei in der mobilen Station die Behandlung folgendes umfasst:

   a) Bestimmen der Amplitude der Spektrallinien mit den Frequenzen (k/T)+((n-1)/pT), um p Spektren ($R_0(f)$) zu erhalten,
   b) Berechnen, für jedes Spektrum, des Verhältnisses der Amplitude seiner Spektrallinien zur Amplitude der entsprechenden Spektrallinien des emittierten Signals,
   c) Ausführen einer inversen Fourier-Transformation der verschiedenen erhaltenen Verhältnisse.

7. Verfahren nach Anspruch 5, wobei in der mobilen Station die Behandlung bzw. Bearbeitung darin besteht, das empfangene Signal mit den verschiedenen, von den p Basisstationen emittierten Signalen zu korrelieren, um so die betreffenden Impulsantworten der p Kanäle zu erhalten.

8. Verfahren nach Anspruch 7, wobei:

   die empfangenen, demodulierten und abgetasteten Signale über eine Bank aus p numerischen Filtern, die den periodischen Signalen der Zeitdauer pT angepasst sind, durchgeleitet werden,
   am Ausgang des n-ten Filters p konsekutive Kopien der Impulsantwort des n-ten Kanals gesammelt werden, wobei die erste Kopie eine nicht-phasenverschobene Version der gesuchten Impulsantwort ist.

9. Verfahren nach einem der Ansprüche 1 bis 8, wobei die Zahl p von Basisstationen nicht gleich einer Potenz von 2 ist, die ganze Zahl p' größer als p als Potenz von 2 und so nahe wie möglich an p festlegt ist, und das Verfahren durchgeführt wird, als ob es p' Basisstationen gäbe, wobei p'-p dieser Stationen virtuell sind und kein Signal liefern.

**Claims**

1. A process for simultaneously measuring, over a period of observation T, the propagation characteristics of a plurality of p radio-frequency channels, p being an integer at least equal to 2, between p base stations and a mobile station, **characterized in that**:

   - from each of the base stations is transmitted simultaneously a periodic signal of period pT, the signal transmitted by the station of rank n, n ranging from 1 to p, having a spectrum constituted by lines located on the frequencies (k/T)+(n-1)/pT) where k is the number of the line,
   - the p signals transmitted by the p stations are received simultaneously in the mobile station and the signals received are processed in a time window of width pT so as to extract the p impulse responses of the p radio-frequency channels.

2. A process according to claim 1, wherein, for transmission at nth station level:

   - a sequence of elements of duration T is produced,
   - this sequence is reproduced with a period T so as to obtain a periodic signal of period T,
   - a carrier wave is produced having a frequency equal to the central frequency $F_0$ of the frequency band to be analyzed,
   - the frequency of the carrier wave is offset by the quantity (n-1)/pT,
   - the signal obtained is transmitted after modulation of the carrier thus offset.

3. A process according to claim 2, wherein the band of the transmitted signals is reduced by filtering so as to limit the band to a width B, the spectra of the transmitted signals extending from -B/2 inclusive to B/2 exclusive and the number k thus taking all the whole values between -N inclusive and N-1 inclusive where N is equal to BT/2.

4. A process according to claims 1 or 2, wherein, to obtain the signals to be transmitted by the base stations, memories are read containing samples of the signals having the spectra in question.

5. A process according to claim 3, wherein, before the p signals received in the mobile station are processed, said received signals previously demodulated to the frequency $F_0$ are sampled.

6. A process according to claim 5, wherein, in the mobile station, said processing consists in:

   a) determining the amplitude of the lines on the frequencies (K/T)+(n-1)/pT) to obtain p spectra (Rn(f)),
   b) calculating, for each spectrum, the ratio of the amplitude of its lines to the amplitude of the corresponding lines of the transmitted signal,
   c) carrying out an inverse Fourier transform of the different ratios obtained.

7. A process according to claim 5, wherein, in the mobile station, said processing consists in correlating the signal received with the different signals transmitted by the p base stations so as to obtain in this way the respective impulse responses of the p channels.

8. A process according to claim 7, wherein:

   - the received demodulated and sampled signals are passed through a bank of p digital filters adapted to the periodic signals of duration pT,
   - at the output of the nth filter are collected p consecutive copies of the impulse response of the nth channel, the first copy being a non out-of-phase version of the impulse response being sought.

9. A process according to any one of the claims 1 to 8, wherein the number p of base stations not being equal to a power of two, the whole number p' is determined greater than p and the closest to p, and which is a power of two, and the process is implemented as if there were p' base stations, p'-p of these stations being virtual and not supplying any signal.

# FIG.1

# FIG.2A

x(t)

+1

0+

−1

# FIG.2B

dB
0
−20
−40
−60

X(f)

−12    0    12    MHz

# FIG.3A

y(t)
20
10
0
−10
−20

0    100    200    300    400    500

# FIG.3B

dB
0
−10
−20
−30
−40

Y(f)

−12    0    12    MHz

# FIG.4

h(t)

dB

−10
−20
−30
−40
−50

0    5    10    15    20    t

# FIG.5

# FIG.6A

# FIG.6B

FIG.7A

FIG.7B

## FIG.8

## FIG.9

# FIG.10A

$-1/T$    $1/T$    f

# FIG.10B

$-1/2T$    $1/2T$    f

FIG.11A

FIG.11B

FIG.11C

FIG.11D

## FIG.12

## FIG13